# NEUE EUROPÄISCHE PATENTSCHRIFT

(11) **EP 0 323 458 B2**
(45) Veröffentlichungstag und Bekanntmachung des Hinweises auf die Entscheidung über den Einspruch: **18.09.1996**
(45) Hinweis auf die Patenterteilung: 05.06.1991
(21) Anmeldenummer: 87904851.0
(22) Anmeldetag: 08.08.1987
(51) Int. Cl.: F02P 7/067

(54) **VORRICHTUNG ZUM STEUERN EINER BRENNKRAFTMASCHINE**
DEVICE FOR CONTROLLING AN INTERNAL COMBUSTION ENGINE
DISPOSITIF DE COMMANDE D'UN MOTEUR A COMBUSTION INTERNE

(30) Priorität: 05.09.1986 DE 3630271
(43) Veröffentlichungstag der Anmeldung: 12.07.1989
(73) Patentinhaber: ROBERT BOSCH GMBH, 70442 Stuttgart (DE)
(72) Erfinder: SCHLEUPEN, Richard, D-7121 Ingersheim (DE)
(86) Internationale Anmeldenummer: DE8700350
(87) Internationale Veröffentlichungsnummer: WO8801692

(56) Entgegenhaltungen:
- DE-A- 2 643 286
- DE-A- 2 736 576
- DE-A- 2 748 663
- DE-A- 3 017 973
- DE-B- 2 446 193
- FR-A- 2 327 585
- US-A- 4 327 687
- Patent Abstracts of Japan, Vol. 5, Nr. 199 (M-102) (871), 17 December 1981, & JP, A, 56118560
- Patent Abstracts of Japan, Vol. 5, Nr. 53 (M63) (725), 14April 1981, & JP, A, 569660

## Beschreibung

### Stand der Technik

Die Erfindung geht aus von einer Vorrichtung nach der Gattung des Hauptanspruchs. Bei Vorrichtungen zum Steuern einer Brennkraftmaschine eines Kraftfahrzeugs, insbesondere der Zündung und dergleichen, ist es bekannt, Sensorsysteme zur Erfassung der Winkelstellung einer Welle der Brennkraftmaschine, insbesondere der Kurbelwelle oder der Nockenwelle, einzusetzen.

Solche Systeme sind z.B. als Segmentsysteme ausgebildet, bei denen Geberscheiben mit der Welle umlaufen, die an ihrem Umfang mit einer zur Anzahl der Zylinder der Brennkraftmaschine proportionalen Anzahl von Segmenten, d.h. langgestreckten markierten Bereichen, versehen sind. Bei der Erfassung der Winkelstellung der Kurbelwelle beträgt die Anzahl der Segmente dabei die Hälfte der Zylinderzahl. Bei Erfassung der Winkelstellung der Nockenwelle ist die Anzahl der Segmente gleich der Zylinderzahl, da die Kurbelwelle bekanntlich mit der doppelten Drehzahl der Nockenwelle umläuft. Dabei ist jedes Segment einem (bei Erfassung der Kurbelwelle zwei) Zylinder (n) der Brennkraftmaschine zugeordnet, und jeder Zündungsvorgang wird in Abhängigkeit vom Vorbeilaufen des zugehörigen Segmentes gesteuert In einem ortsfesten Aufnahmeelement wird die Vorderflanke des Segmentes erkannt, und durch geeignete Zeitsteuerung über die gesamte Segmentlänge werden die Steuervorgänge für die Brennkraftmaschine ausgelöst. Segmentsysteme mit gleich großen Segmenten haben demgegenüber den Nachteil, daß keine für eine verteilerlose oderZweikreis- (z.B. Achtzylindermotor) Hochspannungsverteilung ausreichende Zuordnung möglich ist.

Femersind Segmentsysteme bekannt, bei denen einzelne Segmente durch eine Anzahl von Zähnen und Zahnlücken unterteilt sind, und die von den Zähnen bzw. Zahnläcken im Aufnahmeelement erzeugten Signale einer Steuerschaltung zugeführt werden. Dabei wird die Winkelstellung der Welle durch Auszählen der vorbeilaufenden Zähne bzw. Zahnlücken ermittelt. Dieses Verfahren ist aufwendig und erfordert eine zusätzliche Zähleinrichtung.

Bildet man ferner nur eine einzige Zahnläcke in einem Segment aus, so besteht die Gefahr, daß die zusätzliche Rückflanke eine zusätzliche Zündung auslöst.

Bei allen hier aufgeführten Vorrichtungen sind bei Start der Brennkraftmaschine mindestens eine Umdrehung notwendig, um eine genaue Zuordnung der Markierung zu erkennen.

Aus der US-A-4 327 687 ist eine Vorrichtung zum Steuern einer Brennkraftmaschine eines Kraftfahrzeugs bekannt, bei dem auf einer Geberscheibe mehrere Segmente angeordnet sind. In ihrer in Drehrichtung der Geberscheibe gesehenen Gesamtlänge stimmen die Segmente jeweils überein. Durch die steil abfallende Vorder- und Rückflanke der Segmente beeinflussen sie ein raumfest angeordnetes Aufnahmeelement. Das so erzeugte Meßsignal wird einer Steuerschaltung für die Zündung eines Kraftfahrzeugs zugeführt. Diese Segmente weisen aber keinerlei Markierungen, insbesondere nicht durch Permanentmagnete auf. Deshalb sind eine oder mehrere Umdrehungen notwendig, um eine genaue Zuordnung des Segements zu den einzelnen Zylindern der Brennkraftmaschine vornehmen zu können.

Bei der Steuereinrichtung nach der DE-A-26 43 286 sind auf einer Geberscheibe mehrere Permanentmagnete eingearbeitet. Diese Geberscheibe weist aber keine Segmente auf, sondern arbeitet als Impulsgeber. Beim Impulsgeber werden nur Impulse ausgezählt. Durch einen zusätzlichen auf der Geberscheibe angeordneten Permanentmagneten wird ein zusätzlicher Impuls erzeugt, der die Zeitmessung zwischen den beiden Permanentmagneten unterbricht. Dabei kann es vorkommen, daß aber dieser zusätzliche Impuls die Zeitmessung unterbricht bzw. von neuem startet. Fehlmessungen bzw. Fehlsteuerung sind deshalb nicht auszuschließen.

### Vorteile der Erfindung

Die erfindungsgemäße Vorrichtung mit den kennzeichnenden Merkmalen des Hauptanspruchs hat demgegenüber den Vorteil, daß eine Zuordnung der Zündimpulse für eine verteilerlose oder ZweikreisHochspannungs-verteilung mit einem einzigen Geber unter Beibehaltung der beiden elektrischen Marken am Segmentanfang und Segmentende möglich ist. Aufgrund der sich ergebenden elektrischen Signale (Marken) kann man eindeutig die Zylindergruppen bei einer verteilerlosen Hochspannungsverteilung zuordnen. Es sind dabei keine Änderungen des Profils der Segmente notwendig, so daß insbesondere bei hohen Motorabtriebsmomenten keine Risse durch Verspannungen auftreten können.

Durch die in den Unteransprüchen aufgeführten Maßnahmen sind vorteilhafte Weiterbildungen der im Hauptanspruch angegebenen Vorrichtung möglich.

### Zeichnung

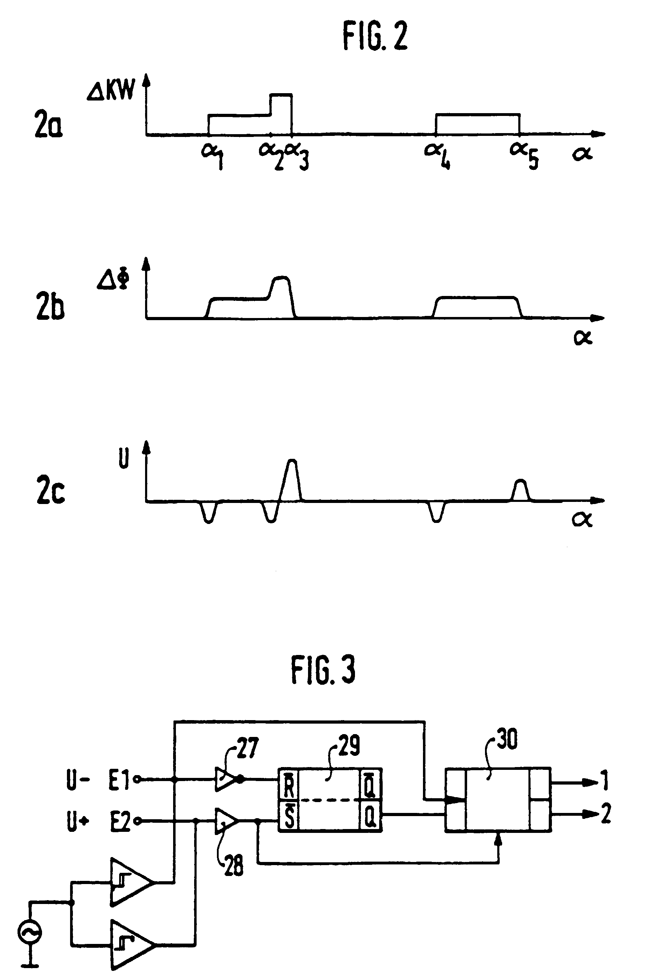

Ein Ausführungsbeispiel der Erfindung ist in der Zeichnung dargestellt und in der nachfolgenden Beschreibung näher erläutert Es zeigen Figur eine Prinzipdarstellung einer Geberscheibe, Figur 2 ein Impulsdiagramm und Figur 3 eine schaltungsgemäße Darstellung.

### Beschreibung des Ausführungsbeispiels

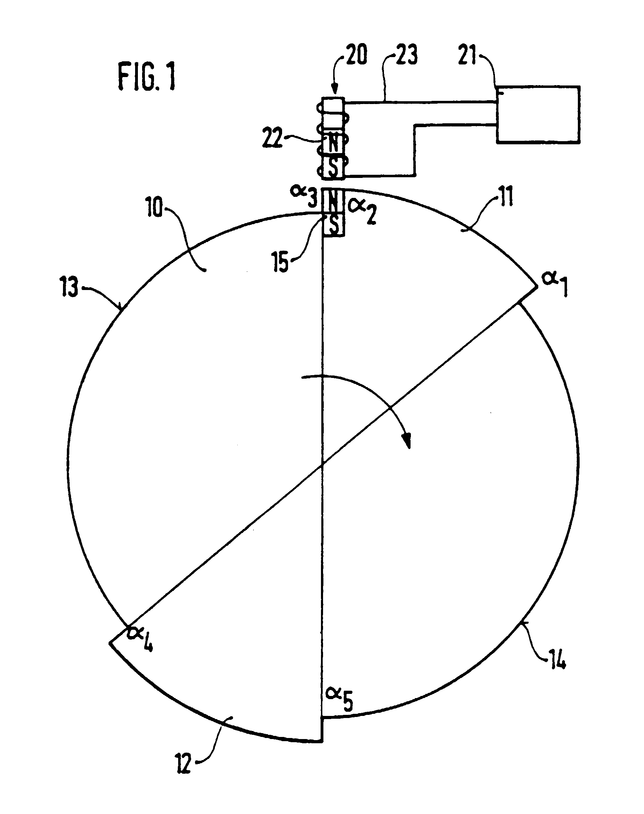

In Figur 1 bezeichnet 10 eine Geberscheibe, die mit der Kurbelwelle oder der Nockenwelle einer Brennkraftmaschine umläuft. Die Geberscheibe 10 weist an ihrem Umfang Segmente 11, 12 sowie dazwischenliegende Lücken 13, 14 auf. Sind, wie in Figur 1, zwei Segmente bzw. zwei Lücken vorgesehen und ist die Geberscheibe 10 an der Kurbelwelle der Brennkraftmaschine befestigt, so eignet sie sich für Vorrichtungen zum Steuern von Vierzylindermotoren. Die Segmente 11, 12 sind gleich lang ausgebildet, sie weisen denselben Drehwinkel auf und liegen sich diametral gegenüber. An einem Ende des Segments 11 ist ein Permanentmagnet 15 angeordnet, dessen Polung in radialer Richtung der Geberscheibe 10 ausgebildet ist. Die Höhe des Permanentmagneten 15 entspricht der Höhe des Segments 11 und paßt sich der Oberflächenkrümmung des Segments 11 an. Das Segment 11 entspricht einschließlich des Permanentmagneten 15 in seiner Länge dem Segment 12. Bei der Herstellung ist somit das Segment 11 durch z.B. Abfräsen um die Breite des Permanentmagneten 15 zu kürzen.

In der Nähe des Umfangs der Geberscheibe 10 befindet sich ein raumfestes Aufnahmeelement 20, das seinerseits mit einer Steuerschaltung 21 in Wirkverbindung steht. Die Art der Wechselwirkung von Geberscheibe 10 und Aufnahmeelement 20 kann dabei sehr verschiedenartig sein. Bei Ausnutzung von magnetischen Wechselwirkungen kann die Geberscheibe 10 aus ferromagnetischem Blechgestanzt sein, und als Aufnahmeelement 20 wird ein Induktivgeberverwendet, der im Ruhezustand bereits einen magnetischen Fluß aufweist. Das in der Figur 1 dargestellte Aufnahmeelement 20 besteht aus einem Permanentmagneten 22 und einer Spule 23.

Wenn die Geberscheibe 10, wie in Figur 1 angezeigt, im Uhrzeigersinn umläuft, wird vom Aufnahmeelement 20 zunächst-beispielsweise im Segment 12 - die Vorderflanke des Segments 12 erfaßt Der Zündvorgang kann dann beispielsweise am Ende des Segments 12 bei einer der Rückflanke des Segments 12 entsprechenden Winkelstellung ausgelöst werden.

Zur Veranschaulichung der Wirkungsweise der in Figur 1 dargestellten Vorrichtung ist in Figur 2 derzeitliche Verlauf der von den Segmenten 11, 12 bzw. von den Lücken 13, 14 und vom Permanentmagneten 15 erzeugten Signale dargestellt Figur 2a zeigt eine Übertragung der Drehbewegung der Kurbelwelle (Δ KW) auf die Umdrehung der Geberscheibe 10 in Abhängigkeit vom Drehwinkel (α) der Geberscheibe. In Figur 2b ist der im Aufnahmeelement 20 erzeugte magnetische Fluß (Δ Φ) in Abhängigkeit vom Drehwinkel (α) der Geberscheibe 10 aufgezeigt Bewegt sich die Geberscheibe 10 im Uhrzeigersinn, so wird an der Vorderflanke des Segments 11, d.h. bei der Winkelstellung α₁, im Aufnahmeelement 20 eine magnetische Flufländerung erzeugt. Der Magnetfluß verläuft in gleicher Höhe, während sich das Segment 11 am Aufnahmeelement 20 vorbeibewegt, folglich wird keine Spannung induziert. Erreicht das Aufnahmeelement 20 den Permanentmagneten 15, d.h. befindet sich die Geberscheibe 10 in der Winkelstellung α₂, so steigt der magnetische Fluß nochmals an. Erreicht das Aufnahmeelement 20 das Ende des Permanentmagneten 15, d.h. die Rückflanke des Segments 11 bzw. die Winkelstellung α₃, so fällt der magnetische Fluß ab. Während sich nun die Lücke 13 am Aufnahmeelement 20 vorbeibewegt, wird kein wesentlicher magnetischer Fluß erzeugt. Analog zum Segment 11 wird nun auch vom Segment 12 an dessen Vorderflanke als auch an der Rückflanke, d.h. bei der Winkelstellung α₄ und α₅ eine magnetische Flußänderung erzeugt.

Figur 2c zeigt nun die im Aufnahmeelement 20 erzeugten Impulse. Jeweils an der Vorderflanke der Segmente 11, 12, d.h. bei der Winkelstellung α₁, bzw. α₄ wird ein negativer Impuls erzeugt Der Impuls ist abhängig von der Polung des Aufnahmeelements 20. Erreicht das Aufnahmeelement 20 den Permanentmagneten in Winkelstellung α₂, so wird ein weiterer negativer Impuls hervorgerufen. Erreicht das Aufnahmeelement 20 die Rückflanke der Segmente 11, 12, d.h. befindet sich die Geberscheibe 10 in der Winkelstellung α₃ bzw. α₅, so wird ein positiver Impuls hervorgerufen. Aufgrund des Magnetfeldes des Permanentmagneten 15 ist der positive Impuls bei Stellung α₃ größer als der Impuls in Stellung α₅. Der zusätzliche Impuls, hervorgerufen durch die Stellung α₂ bzw. die unterschiedliche Impulshöhe bei Stellung α₃, kann nun als Markierung verwendet werden.

Die an den Flanken der Segmente 11 bzw. 12 und in Stellung α₂ durch den Permanentmagneten 15 im Aufnahmeelement 20 erzeugten Spannungen werden über zwei Schmitt-Trigger unterschiedlicher Schaltschwelle den beiden Eingangsklemmen E1 und E2 der in Figur 3 im Prinzpschaltbild dargestellten Auswerteschaltung zugeführt. An die Eingangsklomme E1, an der die Spannung U₋ anliegt, ist ein Inverter 27 angeschlossen. An die Eingangsklemme E2, an der die Spannung U₊ anliegt, ist hingegen eine nichtinvertierende Treiberstufe 28 angeschlossen. Der Ausgang des Inverters 27 ist mit dem invertierenden Reset-Eingang eines Flip-Flops 29 verbunden. An dessen invertierenden Set-Eingang ist der Ausgang der Treiberstufe 28 angeschlossen. Vom Ausgang Q des Flip-Flops 29 führt eine Leitung zum Clear-Enable-Eingang eines Zählers 30. Der invertierende Clear-Eingang des Zählers 30 ist mit dem Ausgang der. Treiberstufe 28 verbunden. Femer liegt am Zähleingang des Zählers 30 die vor dem Inverter 27 abgegriffene Spannung U₋ an. Von den beiden Ausgängen des Zahlers 30 führen Leitungen zu den beiden Zylindergruppen eines Vierzylindermotors. Diese Schaltung dient zur Gewinnung eines Synchron impulses, um bereits beim Start der Brennkraftmaschine eine genaue Zuordnung der Stellung des Geberrades zur jeweiligen Drehung der Welle zu ermöglichen. Dieses Prinzip der Auswertung ist selbstverständlich für alle Motoren mit gerader Zylinderanzahl anwendbar. Bei asymmetrischen Motoren ist darauf zu achten, daß die Asymmetrie innerhalb einer Kurbelwellenumdrehung auftritt.

## Patentansprüche

1. Vorrichtung zum Steuern einer Brennkrattmaschine eines Kraftfahrzeugs, mit einem Sensorsystem, bei dem eine mit einer Welle der Brennkraftmaschine umlaufende Geberscheibe (10) mit einem raumfesten Aufnahmeelement (20) in Wirkverbindung steht, die an ihrem Umfang mit einer zur Anzahl der Zylinder der Brennkraftmaschine proportionalen Anzahl von das Aufnahmeelement (20) beeinflussenden Segmenten (11, 12) versehen ist, wobei die Segmente (11, 12) eine steil abfallende Vorder- und Rückflanke haben und in ihrer in Drehrichtung der Geberscheibe (10) gesehenen Gesamtlänge jeweils übereinstimmen, und das Aufnahmeelement (20) mit einer Steuerschaltung (21) für die Zündung oder dergleichen des Kraftfahrzeugs verbunden ist, dadurch gekennzeichnet, daß mindestens einem der Segemente (11, 12) ein in radialer Richtung der Geberscheibe (10) polarisierter Permanentmagnet (15) als Markierung zugeordnet ist, der in Wirkverbindung mit dem Aufnahmeelement (20) ein der Steuerschaltung (21) zuführbares Signal erzeugt, daß das Segment (11) zusammen mit dem Permanentmagneten (15) in seiner in Drehrichtung der Geberscheibe (10) gesehenen Gesamtlänge den übrigen Segmenten entspricht und daß der Permanentmagnet (15) an einem Ende des Segments (11, 12) angeordnet ist, so daß das der Steuerschaltung (21) zuführbare Signal eine erlichte Signalhöhe gegenüber den durch die verbleibenden Vorder- und Rückflanken der Segmente (11, 12) hervorgerufenen Signale aufweist.

2. Vorrichtung nach Anspruch 1, dadurch gekennzeichnet, daß der Permanentmagnet (15) in Drehrichtung der Scheibe (10) gesehen am Ende eines Segments (11) angeordnet ist.

3. Vorrichtung nach Anspruch 1 und/oder 2, dadurch gekennzeichnet, daß die Geberscheibe (10) Teil einer Zündung mit verteilerloser oder Zweikreis-Hochspannungsverteilung ist

## Claims

1. Device for controlling an internal combustion engine of a motor vehicle, with a sensor system in which an emitter disc (10) revolving with a shaft of the internal combustion engine is operatively connected to a spatially fixed sensor element (20) which is provided at its periphery with a number of segments (11, 12), which influence the sensor element (20), which is proportional to the number of cylinders of the internal combustion engine, the segments (11, 12) having a steeply falling leading and trailing edge and in each case corresponding in their overall length as seen in the direction of rotation of the emitter disc (10), and the sensor element (20) being connected to a control circuit (21) for the ignition or the like of the motor vehicle, characterised in that at least one of the segments (11, 12) is allocated as a marking a permanent magnet (15) which is polarised in the radial direction of the emitter disc (10) and, in operative connection with the recording element (20), generates a signal which can be fed to the control circuit (21), in that, together with the permanent magnet (15), the segment (11) corresponds to the other segments in its overall length, as seen in the direction of rotation of the emitter disc (10), and in that the permanent magnet (15) is arranged at one end of the segment (11, 12), such that the signal which can be fed to the control circuit (21) has an increased signal level in comparison with the signals caused by the remaining leading and trailing edges of the segments (11, 12).

2. Device according to Claim 1, characterised in that, as seen in the direction of rotation of the disc (10), the permanent magnet (15) is arranged at the end of a segment (11).

3. Device according to Claim 1 and/or 2, characterised in that the emitter disc (10) is part of an ignition system with distributorless or two-circuit highvoltage distribution.

## Revendications

1. Dispositif de commande d'un moteur à combustion interne d'un véhicule automobile équipé d'un système de détection, dans lequel un disque phonique (10) tournant avec un arbre du moteur à combustion interne, coopère avec un capteur (20) fixe, et sa périphérie est munie d'un nombre proportionnel au nombre de cylindres du moteur à combustion interne, de segments (11, 12) influençant le capteur (20), ces segments (11, 12) ayant des flancs antérieurs et postérieurs raides et respectivement la même longueur totale vue dans le sens de rotation du disque phonique (10), et le capteur (20) est relié à un circuit de commande (21) de l'allumage ou d'une fonction analogue du véhicule automobile,
caractérisé en ce qu'
à au moins l'un des segments (11, 12) est associé, comme repère, un aimant permanent (15) polarisé en direction radiale du disque phonique (10), et qui coopère avec le capteur (20) pour produire un signal appliqué au circuit de commande (21), en ce que la longueur totale vue dans le sens de rotation du disque phonique (10) du segment (11) y compris l'aimant permanent (15) correspond à celle des autres segments et en ce que l'aimant permanent (15) est prévu à une extrémité du segment (11, 12) pour que l'amplitude du signal appliqué au circuit de commande (21) soit supérieure à celle des signaux engendrés par les autres flancs antérieurs et postérieurs des autres segments (11, 12).

2. Dispositif selon la revendication 1,
caractérisé en ce que
vu dans le sens de rotation du disque (10), l'aimant permanent (15) est disposé à la fin d'un segment (11).

3. Dispositif selon la revendication 1 et/ou la revendication 2,
caractérisé en ce que
le disque phonique (10) fait partie d'un allumage avec une distribution de tension sans distributeur ou bien à deux circuits de haute tension.
